# FASCICULE DE BREVET EUROPEEN

(11) **EP 3 711 146 B1**
(45) Date de publication et mention de la délivrance du brevet: **20.10.2021**
(21) Numéro de dépôt: 18816178.0
(22) Date de dépôt: 13.11.2018
(51) Int. Cl.: H02K 11/25, H02K 5/14, H01H 37/76, H02H 7/085

(54) **MOTEUR ÉLECTRIQUE, NOTAMMENT POUR UN PULSEUR D'AIR POUR DISPOSITIF DE CHAUFFAGE, VENTILATION ET/OU CLIMATISATION POUR VÉHICULE AUTOMOBILE**
ELEKTROMOTOR, INSBESONDERE ZUM GEBLÄSEVORRICHTUNG FÜR DIE HEIZ- UND BELÜFTUNGS- UND/ODER KÜHLUNGSANLAGE IN EINEM KRAFTFAHRZEUG
ELECTRIC MOTOR, NOTABLY FOR AN AIR BLOWING DEVICE FOR THE HEATING, VENTILATION AND/OR AIR-CONDITIONING INSTALLATION OF A VEHICLE

(30) Priorité: 17.11.2017 FR 1760839
(43) Date de publication de la demande: 23.09.2020
(73) Titulaire: Valeo Systemes Thermiques, 78322 Le Mesnil Saint-Denis Cedex (FR)
(72) Inventeur: FRANCO, Ismaël, 78322 Le Mesnil Saint-Denis Cedex (FR); DE SOUZA, Stéphane, 78322 Le Mesnil Saint-Denis Cedex (FR); KWACZEWSKI, Clémence, 78322 Le Mesnil Saint-Denis Cedex (FR)
(74) Mandataire: Valeo Systèmes Thermiques
(86) Numéro de dépôt international: PCT/FR2018/052809
(87) Numéro de publication internationale: WO 2019/097149

(56) Documents cités:
- EP-A1- 0 258 562
- EP-A1- 0 603 000
- EP-A2- 0 511 776
- CH-A- 421 262
- GB-A- 2 222 730
- JP-A- H06 315 251
- JP-A- H07 245 916
- US-A- 4 658 321
- US-A- 6 037 685

## Description

La présente invention concerne un moteur électrique, notamment pour un pulseur d'air pour dispositif de chauffage, ventilation et/ou climatisation pour véhicule automobile.

Les documents EP 0 258 562 A1. JP H06 315251 A et CH 421 262 A divulguent des moteurs électriques selon l'art antérieur.

Un pulseur d'air pour dispositif de chauffage, ventilation et/ou climatisation pour véhicule automobile, connu de l'homme du métier comprend :
- un moteur électrique comprenant deux balais et sur lequel est montée une roue,
- ladite roue est adaptée pour engendrer un flux d'air principal dans ledit dispositif de chauffage, ventilation et/ou climatisation,
- un canal d'air dans lequel ledit flux d'air principal peut circuler, ledit flux d'air principal étant divisé en deux flux d'air secondaires qui vont refroidir chacun un des deux balais du moteur électrique.

Dans ce contexte, la présente invention vise à améliorer l'état de la technique précédemment mentionné, notamment dans le cas ou le pulseur comporte un module de puissance. En effet, en cas de défaillance de ce module de puissance, par exemple un MOS de commande en circuit fermé, le moteur est piloté à pleine vitesse jusqu'à la décharge de la batterie. Les fonctions de limitation de température sont non-opérationnelles, sauf dans le cas d'un module de puissance équipé d'un commutateur ou *Switch* additionnel. La température au niveau du collecteur et des balais moteur peut alors engendrer un risque thermique.

L'invention a ainsi pour objet un moteur électrique, notamment pour un pulseur d'air pour dispositif de chauffage, ventilation et/ou climatisation pour véhicule automobile selon la revendication 1.
- Dé préférence, -un module de puissance est agencée pour assurer l'asservissement en tension du moteur et la limitation de courant.

Grâce à l'invention, en cas de défaillance mentionné ci-dessus, le désengagement de l'organe de rappel élastique joue le rôle de fusible, permettant d'arrêter le moteur en cas de surchauffe.

Selon un aspect de l'invention, l'articulation du bras comporte une liaison pivot.

Selon un aspect de l'invention, l'articulation est réalisée en matériau polymère, notamment en SEBS, à savoir du polystyrène-b-poly(éthylène-butylène)-b-polystyrène.

Selon un aspect de l'invention, l'articulation comporte, notamment à l'une de ses extrémités, une tête de fixation montée sur une culasse du moteur ou un anneau en plastique solidaire de cette culasse.

Selon un aspect de l'invention, l'articulation comporte, notamment à l'une des ses extrémités, une portion de fixation du bras.

Cette désolidarisation est une fonction fusible. En effet, une fois l'organe de rappel élastique désolidarisé du bras portant le balai, le bras pivote vers une position dans laquelle le balai n'est plus en contact électrique avec le collecteur. Le moteur électrique n'est donc plus commandé et les risques de détérioration liées à une éventuelle surchauffe du moteur électrique en cas de commande permanente de celui çi sont supprimés. Cette fonction fusible provenant de la rupture de l'élément de fixation de l'organe de rappel élastique du bras, il est possible de choisir indépendamment la raideur de l'organe de rappel élastique et la température à laquelle la fonction fusible est activée. La pression de contact entre le balai et le collecteur est un paramètre indépendant de la température d'activation de la fonction fusible. Il est ainsi possible d'adapter l'invention aux besoins de différentes applications, par des modifications simples et rapides à mettre en œuvre.

Selon un aspect de l'invention, l'organe de rappel élastique comporte une extrémité fixée au bras, notamment à cet élément de fixation du bras.

Selon un aspect de l'invention, l'organe de rappel élastique comporte une extrémité reliée à une culasse du moteur ou un anneau en plastique solidaire de cette culasse.

Selon un aspect de l'invention, l'organe de rappel élastique est un ressort, notamment un ressort à spires ou un ressort à lame.

Selon un aspect de l'invention, le bras portant le balai est réalisé en matériau un polymère, notamment du polypropylène PPT20.

Selon un aspect de l'invention, l'élément de fixation du bras fond en cas de surchauffe du ou des balais ou du ou des collecteurs.

Selon un aspect de l'invention, le moteur comporte au moins deux balais avec chacun un bras associé avec la fonction fusible.

Selon un aspect de l'invention, le moteur est agencé pour être monté dans un groupe moto-ventilateur pour système de ventilation, chauffage et/ou climatisation pour véhicule automobile.

L'invention a également pour objet un pulseur d'air pour dispositif de chauffage, ventilation et/ou climatisation pour véhicule automobile, comportant un moteur tel que décrit plus haut, et une roue de pulseur entrainée par le moteur.

Selon un mode de réalisation non limitatif, ledit pulseur d'air comprend en outre :
- un dispositif de découplage vibro-acoustique comprenant des nervures ; et
- un capot moteur comprend des doigts adaptés pour coopérer avec lesdites nervures.

L'invention et ses différentes applications seront mieux comprises à la lecture de la description qui suit et à l'examen des figures qui l'accompagnent :
- la figure 1 représente schématiquement un dispositif de chauffage, ventilation, et/ou climatisation comprenant un pulseur d'air selon un mode de réalisation non limitatif de l'invention ;
- la figure 2 représente une vue en perspective du pulseur d'air sans volute de la figure 1 assemblé selon un mode de réalisation non limitatif de l'invention, ledit pulseur d'air comprenant un moteur électrique, une roue et un support moteur comprenant un canal d'air ;
- la figure 3 représente un détail du moteur du pulseur de al figure 2 sur lequel on voit des balais.

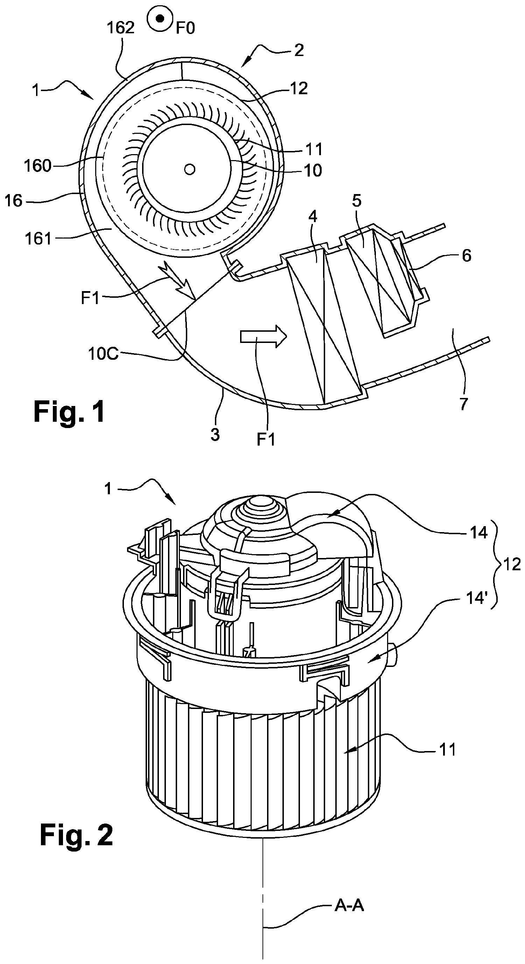

Le pulseur d'air 1 pour véhicule automobile est décrit en référence à la figure 1 selon un mode de réalisation non limitatif.

Dans un mode de réalisation non limitatif, un pulseur d'air 1 est utilisé dans un dispositif de climatisation, ventilation et/ou chauffage 2, appelé en anglais HVAC « Heating Ventilation and Air Conditioning », pour véhicule automobile.

Dans la suite de la description, le dispositif de climatisation, ventilation et/ou chauffage 2 est également appelé dispositif HVAC.

Le dispositif HVAC est illustré schématiquement sur la figure 1. Il comprend :
un pulseur d'air 1 délivrant un flux d'air F1 dans un canal d'air 3 ;
ledit canal d'air 3 ;
un évaporateur 4 d'un circuit de réfrigération (lorsque la fonction climatisation est présente) disposé dans le canal d'air 3 ;
un dissipateur thermique 5 échangeur de chaleur à liquide disposé dans le canal d'air 3 et parcouru par un liquide de refroidissement du moteur électrique du véhicule automobile ; et
optionnellement un dissipateur thermique électrique additionnel 6 disposé dans le canal d'air 3.

Par la suite, le flux d'air F1 sera également appelé flux d'air principal F1.

En mode climatisation, le flux d'air F1 est dévié dans un passage 7 en dérivation du dissipateur thermique 5. En aval des dissipateurs thermiques 5 et 6, le canal d'air 3 distribue le flux d'air F1 vers des bouches de sortie dans l'habitacle du véhicule automobile. La distribution et optionnellement le mixage du flux d'air F1 se font à l'aide de volets commandés (non illustrés). Le mixage permet la régulation en température du flux d'air F1 avant la distribution dans l'habitacle.

Dans la suite de la description, le canal d'air 3 est également appelé canal d'air principal 3.

Dans un premier mode de réalisation non limitatif illustré sur la figure 1, le dispositif HVAC comprend en outre une volute 16 et le pulseur d'air 1 ne comprend pas ladite volute 16.

Dans un deuxième mode de réalisation non limitatif non illustré, le dispositif HVAC comprend une partie de la volute 16 et le pulseur d'air 1 comprend une partie de la volute 16. En particulier, le support moteur 12 (décrit plus loin) du pulseur d'air 1 est conformé de sorte à définir une partie de la volute 16 qui est complémentaire de l'autre partie de la volute 16 comprise dans le dispositif HVAC. Le support moteur 12 comprend ainsi une paroi qui est la partie de la volute 16 complémentaire à l'autre partie de la volute 16 comprise dans le dispositif HVAC. Cette partie de volute 16 complémentaire étant connue de l'homme du métier, elle n'est pas décrite ici.

La figure 2 illustre un pulseur d'air 1 du dispositif HVAC sans volute 16 selon un mode de réalisation non limitatif.

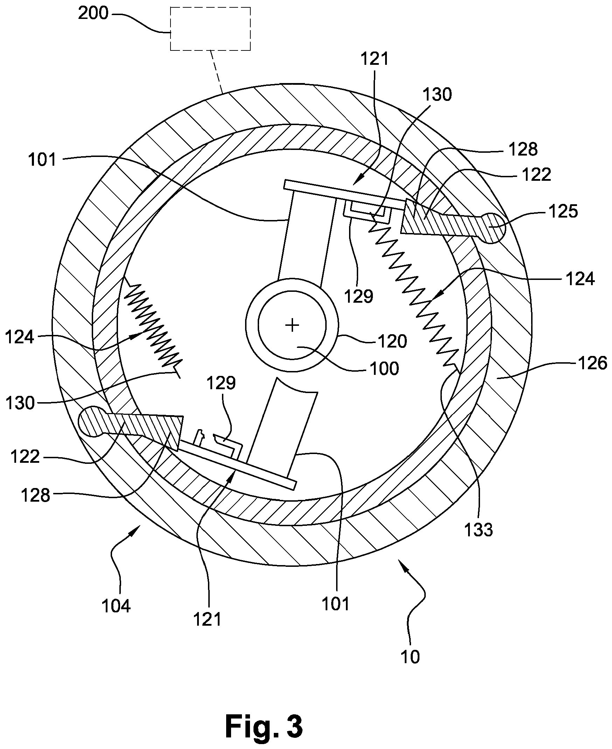

Le pulseur d'air 1 comporte :
un moteur électrique 10 comprenant un arbre moteur 100 et des balais 101 et sur lequel est montée une roue 11 (voir figure 3);
ladite roue 11 adaptée pour engendrer un flux d'air principal F1 dans ledit dispositif HVAC ;
un support moteur 12 dans lequel est logé ledit moteur électrique 10.

La volute 16 est illustrée vue de dessus sur la figure 1.

La volute 16 est une partie fixe dans le pulseur d'air 1. Elle est adaptée pour guider le flux d'air principal F1 dans le dispositif HVAC.

Elle est adaptée pour accueillir la roue 11.

Elle comprend une paroi interne 162. Sur un de ses côtés 161, la volute présente une ouverture 160 (illustrée en pointillée sur la figure 1) dans lequel le support moteur 12 vient se fixer. Le support moteur 12 délimite un logement pour le moteur électrique 10. Le côté opposé (non illustré) au côté 161 présente une ouverture d'admission d'un flux d'air entrant F0. Un flux d'air entrant F0 illustré sur la figure 1 est aspiré axialement dans la volute 16 et est mis en circulation dans la volute 16 pour donner le flux d'air principal F1 et ce dernier est extrait de la volute 10 par une sortie 10c raccordée au canal d'air principal 3. Le canal d'air principal 3 est délimité par la volute 16.

Dans un mode de réalisation non limitatif, le débit du flux d'air principal F1 est compris entre 100kg/h et 600kg/h.

Le moteur électrique 10 est adapté pour entraîner en rotation la roue 11.

Le moteur électrique 10 fait saillie latéralement sur le côté 161 de la volute 16. Il est logé dans le support moteur 12 et est adapté pour être fixé sur le support moteur 12.

Il comporte un arbre moteur 100 sur lequel est montée la roue 11. L'arbre moteur 100 définit un axe A-A » de rotation de la roue 11 et d'assemblage d'éléments du pulseur d'air 1. Cet axe A-A » est également appelé par la suite axe moteur A-A ». L'arbre moteur 100 est adapté pour s'emmancher dans le moyeu de la roue 11 par exemple.

Le moteur électrique 100 est fixé à une bague intérieure de l'embase 14' du support moteur 12.

Dans un mode de réalisation non limitatif, le moteur électrique 10 comporte en outre :
un rotor (non illustré) et un stator 104 ;
au moins deux balais 101,
un faisceau de connexions électriques et un module de commande 200.

Le moteur électrique 10 comporte en outre :
- un collecteur électrique 120 porté par l'arbre 100,
- les balais 101 agencés pour venir en contact électrique avec le collecteur 120,
- un bras mobile 121 portant chaque balai 101 et comportant une articulation 122 agencée pour exercer un effort tendant à faire pivoter le bras 121 d'une première position dans laquelle le balai 101 est en contact avec le collecteur 120 vers une deuxième position dans laquelle le balai associé 101 est éloigné du collecteur 120,
- un organe de rappel 124 agencé pour maintenir chaque bras 121 dans la première position contre l'effort exercé par l'articulation 122 du bras.

Cet organe de rappel 124 cesse d'agir sur le bras lorsque la température au sein du moteur, notamment la température du bras, excède un seuil prédéterminé, par exemple un seuil de 180°, de manière à ce que le bras 121 se déplace vers la deuxième position du fait de l'effort exercé par l'articulation 122 du bras.

L"articulation 122 du bras est formée par une liaison pivot réalisée en matériau polymère, notamment en SEBS, à savoir du polystyrène-b-poly(éthylène-butylène)-b-polystyrène.

L'articulation 122 comporte, notamment à l'une de ses extrémités, une tête de fixation 125 montée sur une culasse 126 du moteur ou un anneau en plastique solidaire de cette culasse.

L'articulation comporte, à l'autre de ses autres extrémités, une portion de fixation 128 du bras.

Le bras 121 comporte un élément de fixation 129 agencé pour permettre la fixation de l'organe de rappel élastique 124.

Cet élément de fixation 129 du bras est agencé pour casser, notamment en fondant, lorsque la température de cet élément de fixation atteint une valeur prédéterminée de manière à désolidariser l'organe de rappel élastique 124 du bras. Cette désolidarisation est une fonction fusible.

L'organe de rappel élastique 124 comporte une extrémité 130 fixée au bras 121, à cet élément de fixation du bras 129, ici en forme de crochet.

L'organe de rappel élastique 124 comporte une extrémité 133 reliée à la culasse du moteur ou un anneau en plastique solidaire de cette culasse.

L'organe de rappel élastique 124 est un ressort à spires ou un ressort à lame.

Selon un aspect de l'invention, le bras 121 portant le balai est réalisé en matériau polymère.

Sur la figure 3, l'un des ressorts 124 est désolidarisé du bras 121, ce qui permet de réaliser la fonction fusible, le crochet 129 étant cassé.

## Revendications

1. Moteur électrique (10), notamment pour un pulseur d'air pour dispositif de chauffage, ventilation et/ou climatisation pour véhicule automobile, comportant :
- un arbre (100),
- un collecteur électrique (120) porté par l'arbre,
- au moins un balai (101) agencé pour venir en contact électrique avec le collecteur,
- un bras (121) mobile portant le balai et comportant une articulation (122) agencée pour exercer un effort tendant à faire pivoter le bras (121) d'une première position dans laquelle le balai (101) est en contact avec le collecteur (120) vers une deuxième position dans laquelle le balai est éloigné du collecteur (120),
- un organe de rappel élastique (124) agencé pour maintenir le bras (121) dans la première position contre l'effort exercé par l'articulation du bras, le moteur (10) étant agencé de sorte que cet organe de rappel élastique (124) cesse d'agir sur le bras lorsque la température au sein du moteur, notamment la température du bras (121), excède un seuil prédéterminé de manière à ce que le bras se déplace vers la deuxième position du fait de l'effort exercé par l'articulation (122) du bras (121), **caractérisé en ce que** le bras (121) comporte un élément de fixation (129), notamment en forme de crochet, agencé pour permettre la fixation de l'organe de rappel élastique (124), cet élément de fixation (129) du bras (121) étant agencé pour casser. notamment en fondant, lorsque la température de cet élément de fixation atteint une valeur prédéterminée, de manière à désolidariser l'organe de rappel élastique (124) du bras (121).

2. Moteur selon la revendication précédente, l'articulation étant réalisée en matériau polymère, notamment en SEBS, à savoir du polystyrène-b-poly( éthylène-butylène)-b-polystyrène.

3. Moteur selon l'une des revendications précédentes, dans lequel l'articulation (122) comporte, notamment à l'une de ses extrémités, une tête de fixation (125) montée sur une culasse (126) du moteur (10) ou un anneau en plastique solidaire de cette culasse (126).

4. Moteur selon l'une des revendications précédentes, dans lequel l'organe de rappel élastique (124) est un ressort, notamment un ressort à spires ou un ressort à lame.

5. Moteur selon l'une des revendications précédentes, dans lequel le moteur (10) comporte au moins deux balais (101) avec chacun un bras (121) associé avec la fonction fusible.

6. Moteur selon l'une des revendications précédentes, dans lequel le moteur (10) est agencé pour être monté dans un groupe moto-ventilateur pour système de ventilation, chauffage et/ou climatisation pour véhicule automobile.

7. Pulseur d'air pour dispositif de chauffage, ventilation et/ou climatisation pour véhicule automobile, comportant un moteur (10) selon l'une des revendications précédentes, et une roue de pulseur entrainée par le moteur.

## Patentansprüche

1. Elektromotor (10), insbesondere für einen Lüfter für eine Heizungs-, Lüftungs- und/oder Klimaanlage für ein Kraftfahrzeug, umfassend:
- eine Welle (100),
- einen Stromkollektor (120), der von der Welle getragen wird,
- mindestens eine Bürste (101), die dazu gestaltet ist, mit dem Kollektor in elektrischen Kontakt zu gelangen,
- einen beweglichen Arm (121), der die Bürste trägt und ein Gelenk (122) umfasst, das dazu gestaltet ist, eine Kraft auszuüben, die dazu tendiert, den Arm (121) aus einer ersten Position, in welcher die Bürste (101) mit dem Kollektor (120) in Kontakt ist, in eine zweite Position, in welcher die Bürste vom Kollektor (120) entfernt ist, schwenken zu lassen,
- ein elastisches Rückstellorgan (124), das dazu gestaltet ist, den Arm (121) in der ersten Position gegen die vom Gelenk des Arms ausgeübte Kraft zu halten,
wobei der Motor (10) derart gestaltet ist, dass dieses elastische Rückstellorgan (124) nicht mehr auf den Arm einwirkt, wenn die Temperatur innerhalb des Motors, insbesondere die Temperatur des Arms (121), einen vorbestimmten Schwellenwert überschreitet, so dass sich der Arm aufgrund der vom Gelenk (122) des Arms (121) ausgeübten Kraft zur zweiten Position hin bewegt,
**dadurch gekennzeichnet, dass** der Arm (121) ein, insbesondere hakenförmiges, Befestigungselement (129) umfasst, das dazu gestaltet ist, das Befestigen des elastischen Rückstellorgans (124) zu ermöglichen, wobei dieses Befestigungselement (129) des Arms (121) dazu gestaltet ist, zu brechen, insbesondere indem es schmilzt, wenn die Temperatur dieses Befestigungselements einen vorbestimmten Wert erreicht, so dass das elastische Rückstellorgan (124) vom Arm (121) getrennt wird.

2. Motor nach dem vorhergehenden Anspruch, wobei das Gelenk insbesondere aus Polymermaterial hergestellt ist, insbesondere aus SEBS, das heißt Polystyrol-b-poly(ethylen-butylen)-b-polystyrol.

3. Motor nach einem der vorhergehenden Ansprüche, wobei das Gelenk (122), insbesondere an einem seiner Enden, einen Befestigungskopf (125) umfasst, der an einem Joch (126) des Motors (10) oder einem mit diesem Joch (126) fest verbundenen Kunststoffring montiert ist.

4. Motor nach einem der vorhergehenden Ansprüche, wobei das elastische Rückstellorgan (124) eine Feder ist, insbesondere eine Spiralfeder oder eine Blattfeder.

5. Motor nach einem der vorhergehenden Ansprüche, wobei der Motor (10) mindestens zwei Bürsten (101) umfasst mit jeweils einem Arm (121), welcher der Schmelzsicherungsfunktion zugeordnet ist.

6. Motor nach einem der vorhergehenden Ansprüche, wobei der Motor (10) dazu gestaltet ist, in einer Gebläseeinheit für eine Lüftungs-, Heizungs- und/oder Klimaanlage für ein Kraftfahrzeug montiert zu werden.

7. Lüfter für eine Heizungs-, Lüftungs- und/oder Klimaanlage für ein Kraftfahrzeug, umfassend einen Motor (10) nach einem der vorhergehenden Ansprüche und ein von dem Motor angetriebenes Lüfterrad.

## Claims

1. Electric motor (10), in particular for an air blower for a motor vehicle heating, ventilation and/or air-conditioning device, comprising:
- a shaft (100),
- an electric commutator (120) borne by the shaft,
- at least one brush (101) arranged to come into electrical contact with the commutator,
- a mobile arm (121) bearing the brush and comprising an articulation (122) arranged to exert a force that urges the arm (121) to pivot from a first position, in which the brush (101) is in contact with the commutator (120), to a second position, in which the brush is moved away from the commutator (120),
- an elastic return member (124) is arranged to hold the arm (121) in the first position counter to the force exerted by the articulation of the arm, the motor (10) being arranged in such a way that this elastic return member (124) stops acting on the arm when the temperature inside the motor, in particular the temperature of the arm (121), exceeds a predetermined threshold in such a way that the arm moves towards the second position owing to the force exerted by the articulation (122) of the arm (121),
**characterized in that** the arm (121) comprises a fixing element (129), in particular in the shape of a hook, that is arranged so as to make it possible to fix the elastic return member (124), this element (129) for fixing the arm (121) being arranged to break, in particular by melting, when the temperature of this fixing element reaches a predetermined value, so as to separate the elastic return member (124) from the arm (121).

2. Motor according to the preceding claim, the articulation being made of polymer material, in particular SEBS, specifically polystyrene-b-poly(ethylene-butylene)-b-polystyrene.

3. Motor according to either of the preceding claims, wherein the articulation (122) comprises, in particular at one of its ends, a fixing head (125) mounted on a yoke (126) of the motor (10), or a plastic ring that is as one with this yoke (126).

4. Motor according to one of the preceding claims, wherein the elastic return member (124) is a spring, in particular a coil spring or a leaf spring.

5. Motor according to one of the preceding claims, wherein the motor (10) comprises at least two brushes (101), each having an arm (121) associated with the fusible function.

6. Motor according to one of the preceding claims, wherein the motor (10) is arranged to be mounted in an engine fan unit for a motor vehicle ventilation, heating and/or air-conditioning system.

7. Air blower for a motor vehicle ventilation, heating and/or air-conditioning system, comprising a motor (10) according to one of the preceding claims, and a blower wheel driven by the motor.
